# EUROPEAN PATENT APPLICATION

(11) **EP 4 037 283 A1**
(43) Date of publication of application: **03.08.2022**
(21) Application number: 21154625.4
(22) Date of filing: 01.02.2021
(51) Int. Cl.: H04L 29/08

(54) **CONTROLLER AND METHOD FOR ADJUSTING A BALANCED CONNECTIVITY OPTIMUM**

(71) Applicant: Siemens Aktiengesellschaft, 80333 München (DE)
(72) Inventor: Kornbichler, Andreas, 83623 Dietramszell (DE); Riedl, Johannes, 84030 Ergolding (DE)

(57) **Abstract**

While current practices provide for various mechanisms employed on a network level to ensure a balance of connectivity requirements between components communicating within the network, these mechanisms fall short to optimize a traffic flow performed between a particular device and its communication partners. Still further, current practices focus at best on a device overall bandwidth management without possible regard to individual bandwidth consumption of the applications executed in the device. This leads to a precarious situation of applications competing inside a device and attempting to seize as much data transmission capacity for its own purposes as possible. The present embodiments obtain a balanced connectivity optimum of a device while considering applicationspecific connectivity requirements in the device. The connectivity optimum is aimed such that a holistic or over-all device connectivity performance is optimized rather than individually optimizing one or some of the applications executed on the device.

## Description

### TECHNICAL FIELD

The present embodiments relate to a method for obtaining a balanced connectivity optimum.

### BACKGROUND

The evolvement of networking between computing devices has eventually led to a so-called »Internet of Things« or IoT. In a world of ever-increasing devices and technologies, IoT concepts propose to provide each device with a network connection in order to enable these devices to transceive data with other devices, thus forming a network of connected things. Accordingly, a prevalence of communications between devices over communication networks is further increasing.

In an industrial context IoT means connecting devices - or industrial entities - in order to achieve a composite interaction, e.g. for tracking, monitoring and management of a more complex industrial entity.

Communication networks for connecting industrial devices have to carry a variety of traffic types. The two extremes are small, deterministic packets having a limited allowed latency with only a few bytes of information on one side, and nondeterministic bursts of several packets with a relaxed latency requirement but with relatively large data volume on the other side.

In the field of industrial automation time-critical traffic has to be transmitted with a deterministic maximum latency. This means that data packets have to arrive within a certain time frame.

On the other hand, applications executed on devices such as industrial devices, frequently rely on data driven services provided by a data driven service provider such as a cloud storage provider. Invoking data driven services or other kind of industrial services may require a high bandwidth due to a large data volume to be transferred between the device and a data driven service provider. Bandwidth or connectivity resources in general are a scarce commodity in any network. Connectivity resources may be limited either due to cost reasons or technical reasons, for example when certain QoS (Quality of Service) parameters have to be adhered to. A well-balanced network requires all network nodes to make difficult tradeoffs over a wide range of QoS variations.

Current practices provide for various mechanisms employed on a network level to ensure a balance of bandwidth requirements between components communicating within the network. Such mechanisms, however, fall short to optimize a traffic flow performed between a particular device and its communication partners and, even more, to optimize a traffic flow performed between particular applications running on the device along with their respective communication partners.

Still further, current practices focus at best on a device overall bandwidth management without possible regard to individual bandwidth consumption of the applications executed in the device. This leads to a precarious situation of applications competing inside a device and attempting to seize as much data transmission capacity for its own purposes as possible. Until today, applications are generally agnostic towards connectivity management of their hosting device.

It is with respect to these and other technical challenges that the disclosure made herein is presented.

### SUMMARY

One preliminary consideration according to the present embodiments in addressing existing problems is to obtain a balanced connectivity optimum while considering application-specific connectivity requirements. Said application-specific connectivity requirements may be directed to an importance of a specific application, a real-time criticality of a specific application, a priority of a specific application etc.

The connectivity optimum is aimed such that a holistic or overall device connectivity performance is optimized rather than individually optimizing one or some of the applications executed on the device.

A connectivity optimum may, for example, be an effective use of available connectivity resources on a device, or, for example an optimized bandwidth performance considering more than one data exchanging application, an optimized holistic device latency behavior, an optimized holistic device clock timing behavior, etc.

Embodiments herein generally involve a computer-implemented method for adjusting a balanced connectivity optimum.

In one example, a computer-implemented method for adjusting a balanced connectivity optimum is proposed, the method including the steps of:
- obtaining at least one application-specific connectivity requirement from at least one application running on a device;
- monitoring a plurality of application-related connectivity parameters of the at least one application;
- determining at least one optimized setting for at least one of the applications such that a holistic device connectivity performance is optimized while considering one or more of the at least one application-specific connectivity requirements;
- establishing at least one control channel interfacing at least one data storage assigned to one or more of the applications
- outputting the at least one optimized setting to the at least one data storage via the respective control channels to communicate and implement the at least one optimized setting within one or more of the applications.

In another example, a controller in communication with at least one application running on a device is proposed, wherein the controller comprises:
- an inventory module for obtaining at least one application-specific connectivity requirement from at least one application and for monitoring a plurality of application-related connectivity parameters of the at least one application;
- an optimization module for determining at least one optimized setting for at least one of the applications such that a holistic device connectivity performance is optimized while considering one or more of the at least one application-specific connectivity requirements;
- a provisioning module for establishing at least one control channel interfacing at least one data storage assigned to one or more of the applications, wherein the provisioning module outputs the at least one optimized setting to the at least one data storage via the respective control channels to communicate and implement the at least one optimized setting within one or more of the applications.

The techniques described herein may provide certain advantages. For example, the techniques may allow a controller of the device to gain knowledge of how the device is connected, e.g. wired, wirelessly, or cellularly connected. The techniques may further allow the controller to gain knowledge of connectivity parameters of the holistic device such as a theoretical bandwidth of a device's network interface. The techniques may further allow the controller to gain knowledge of application-specific resources which are occupied on the device for a specific application. Such application-specific resources may include a used bandwidth per interface, a number of network transmission errors per interface, a CPU runtime, a quantity of used or occupied memory space, e.g. random-access memory (RAM) or memory space in specific registers assigned to a processor core.

The techniques may allow the controller to determine and to apply at least one optimized setting for the applications such that a holistic device connectivity performance is optimized. This approach advantageously abolishes manual optimization of individual settings through use of a central provisioning module and use of control channels which are easier to manage instead of persistent configurations.

The techniques may allow the controller to set most appropriate connectivity options for the applications in order to obtain an optimized connectivity performance from a holistic device perspective, while taking into account the needs and priorities of one or more applications running on the device.

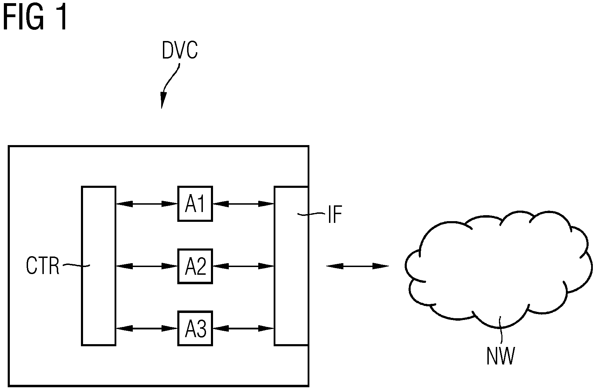

### DESCRIPTION OF THE DRAWING

The objects as well as further advantages of the present embodiments will become more apparent and readily appreciated from the following description of the preferred embodiments, taken in conjunction with the accompanying drawing in which a block diagram illustrates a controller being assigned to a device, the controller being in communication with at least one application running on the device.

### DETAILED DESCRIPTION

The FIG is a block diagram illustrating an example controller CTR in accordance with techniques described herein. As shown in the example of the FIG, one or more software applications A1,A2,A3 are executed on a device DVC. More specifically a - not shown - computer-readable storage medium includes instructions to cause a - not shown - processor to execute these applications A1,A2,A3. While, for the illustration of this example, the first application A1 is assumed to have a low priority, the second and third application A2,A3 are assumed to have a high priority.

The device DVC is connected to other devices - not shown - through a network NW. A network interface IF such as a NIC (Network Interface Card) in the device DVC is part of the device DVC. This network interface IF may include physical and/or logical functional components which are configured to exchange data packets with the network NW by establishing various logical connectivity links of the applications A1,A2,A3 with communication partners - not shown - participating in a communication via the network NW. The FIG shows a part of these connectivity links, represented by double arrows between the applications A1,A2,A3 and the network interface IF.

A connectivity controller or controller CTR, which is either assigned to the device DVC or, alternatively, integrated within the device DVC as shown in the FIG serves to determine and to apply at least one optimized setting for the applications A1,A2,A3 such that a holistic device connectivity performance is optimized.

The controller CTR may be in communication with at least one of the applications A1,A2,A3 executed on the device DVC, wherein a respective communication C1,C2,C3 is represented by a double arrows between the application A1,A2,A3 and the controller CTR.

According to an alternative application example - not shown in the drawing - the controller CTR may be designed as an application module which is integrated and executed in one of the applications A1,A2,A3 executed in the device DVC, e.g. the first application A1. According to this example the controller CTR is executed as a part of this first application A1, thereby controlling the other applications A2,A3 executed inside the device and the remaining application modules of the first application A1 itself.

According to an alternative application example - not shown in the drawing - the controller CTR may be designed as distributed application modules wherein the distributed application modules are integrated and executed in a respective one of a selected multiplicity of applications A1,A2. Applications A1,A2 assigned to this multiplicity of applications A1,A2 may be selected according to whether the selected applications A1,A2 are communicating applications A1,A2- or more specifically applications for which a network access activity with the device-external network NW is not excluded - while the remaining applications A3 are non-communicating applications A3, or in other words applications A3 for which a network access activity with the device-external network NW may be excluded. According to this application example, the controller CTR is executed in collaboration of the distributed application modules respectively executed as part of the communicating applications A1,A2, such that only the respective communicating applications A1,A2 having a distributed application module integrated and executed are entitled to participate in the task of the controller CTR.

The controller CTR may comprise a modular design comprising an inventory module, an optimization module, and a provisioning module, all three of which are not shown in the FIG for clarity reasons. The inventory module, the optimization module, and the provisioning module may each be designed individually or together as a software module and/or hardware module. As the controller CTR itself may be an application, the inventory module, the optimization module, and the provisioning module that make up the controller may be functional software components of the controller CTR.

The inventory module of the controller CTR may be arranged for obtaining at least one application-specific connectivity requirement from at least one of the applications A1,A2,A3

The inventory module controller CTR may be further arranged for monitoring a plurality of application-related connectivity parameters of the at least one application A1,A2,A3, including in some cases the monitoring on demand, event-driven and/or on a periodic basis. A periodic basis may be advantageous when network access activity is not required or minimal for a particular application A1,A2,A3. The monitored application-related connectivity parameters may include one or more of:
- a bandwidth consumed by the monitored application A1,A2,A3;
- a runtime of the monitored application A1,A2,A3; and/or;
- a number of failure notifications issued by the monitored or by another application A1,A2,A3;

The optimization module of the controller CTR may be arranged for determining at least one optimized setting for at least one of the applications such that a holistic device connectivity performance is optimized. Said optimized settings may include one or more of:
- a bandwidth assigned to the respective application A1,A2,A3 for its network access;
- a latency assigned to the respective application A1,A2,A3 for its network access; and/or;
- a priority assigned to the respective application A1,A2,A3 for its network access.

The optimized setting for at least one of the applications is determined while considering one or more of the at least one application-specific connectivity requirements. Said application-specific connectivity requirements may include one or more of:
- an importance of a specific application,
- a real-time criticality of a specific application, and/or;
- a priority of a specific application etc.

One possible objective of the optimization could be to obtain a balanced connectivity optimum - albeit only one optimized setting for only one application - while considering application-specific connectivity requirements. A balanced connectivity optimum means that the optimized setting or the optimized settings are balanced with the application-specific connectivity requirements on the one hand and, on the other hand, balanced such that a holistic device connectivity performance is optimized rather than the device connectivity of a single application.

The provisioning module of the controller CTR may be arranged for establishing at least one control channel C1,C2,C3 interfacing at least one data storage - not shown -assigned to one or more of the applications A1,A2,A3 wherein the provisioning module outputs the at least one optimized setting to the at least one data storage via the respective control channels C1,C2,C3 in order to assign the at least one optimized setting to one or more of the applications A1,A2,A3. The data storage may be either assigned to a respective application A1,A2,A3 or, alternatively or additionally, the data storage may be part of a memory space or registry for providing settings of applications. The step of assigning the at least one optimized setting to one or more of the applications A1,A2,A3 may include a step of communicating the at least one optimized setting to one or more of the applications A1,A2,A3, or implementing the at least one optimized setting to one or more of the applications A1,A2,A3, or both.

There are further possible application examples of processing the optimized settings:
- According to a second example using a user interaction, the at least one optimized setting - which may include an appropriate connectivity option - may be provided to a user of the device. The provision of one or more optimized setting may be effected by a display section - not shown - assigned to the device or assigned to an engineering tool or management tool. The engineering or management tool may logically and at least temporarily connected to the device by a control channel C1,C2,C3. The user receiving a proposal for one or more optimized settings may decide of whether to apply some or more of the proposed optimized setting or not. Further on, in the case of a multiplicity of optimized settings and/or composed optimized settings, the user may decide which part of the proposed optimized settings is applied or not.
- According to a second example using a rule-based optimization on an application level, the at least one optimized setting - which may include an appropriate connectivity option - may be assigned to one or more of the applications A1,A2,A3 by communicating, via the respective control channels C1,C2,C3, the at least one optimized setting to one or more of the applications A1,A2,A3. Based on the at least one optimized setting proposed by the controller CTR and optionally based on additional information - e.g. specific pre-defined rules implemented or parameterized within a specific application A1,A2,A3 - are used to amend a configuration of the specific application A1,A2,A3, wherein the adaptation or amendment may correspond with the connectivity behavior - e.g. restriction of bandwidth, etc. - of the specific application A1,A2,A3.
- According to a third example using a rule-based optimization on a device level, the at least one optimized setting - which may include an appropriate connectivity option - may be assigned to one or more of the applications A1,A2,A3 by communicating, via the respective control channels C1,C2,C3, the at least one optimized setting to one or more of the applications A1,A2,A3. Based on the at least one optimized setting proposed by the controller CTR and optionally based on additional information, e.g. pre-defined rules implemented or parameterized on a device-level of the device DVC, are used to amend a configuration on a device level, which offers access to applications A1,A2,A3. To this end, the amendment of a configuration of the specific applications A1,A2,A3 may be carried out on a device level, which allows to consider additional device data which would be otherwise not accessible for the applications A1,A2,A3. Advantageously, the applications A1,A2,A3 provide an interface for such connectivity optimizations. For this purpose, the control channels C1,C2,C3 or other control channels similar to these control channels C1,C2,C3 may be used.
- According to a fourth example using an AI-based (Artificial Intelligence) optimization the at least one optimized setting may be determined using an artificial neural network model. The determination of at least one optimized setting for at least one of the applications A1,A2,A3 may start by iteratively assigning a plurality of application-related connectivity parameters to a plurality of nodes associated with the artificial neural network model to generate at least one optimized setting for at least one of the applications. For a current iteration, a trade-off value may be computed, this trade-off value based on the at least one optimized setting of the current iteration and at least one of the application-specific connectivity requirements. Eventually, at least one optimized setting of the current iteration is selected wherein the selection is based on the trade-off value calculated for the current iteration. Other usage of neural networks or alternative AI-methodologies may be used in the alternative.
- According to a fifth example using an AI-based (Artificial Intelligence) optimization on an application level, the at least one optimized setting may be determined and, optionally along with additional information, be assigned to one or more of the applications A1,A2,A3. AI-methodologies are used within the application A1,A2,A3 to further optimize the configuration of the application A1,A2,A3 wherein the adaptation or amendment may correspond with the connectivity behavior - e.g. restriction of bandwidth, etc. - of the specific application A1,A2,A3. A usage of neural networks or an AI-methodology as stated for a controller in the fourth example above may be used accordingly on an application level.
- According to a sixth example using an AI-based (Artificial Intelligence) optimization on a device level, the at least one optimized setting may be assigned to one or more of the applications A1,A2,A3 by communicating, via the respective control channels C1,C2,C3, the at least one optimized setting to one or more of the applications A1,A2,A3. Based on the at least one optimized setting proposed by the controller CTR and optionally based on additional information a configuration on a device level is amended, which offers access to applications A1,A2,A3. To this end, the amendment of a configuration of the specific applications A1,A2,A3 may be carried out on a device level, which allows to consider additional device data which would be otherwise not accessible for the applications A1,A2,A3. AI tools and mechanisms on a device level are used to identify the optimized connectivity settings for every application. A usage of neural networks or an AI-methodology as stated for a controller in the fourth example above may be used accordingly on an application level.

An optimization process could be carried out as exemplified below. A priority of each application is determined as an application-specific connectivity requirement by the controller application CTR: While the first application A1 is determined to have a low priority, the second and third application A2,A3 are determined to have a high priority.

The controller application CTR is then monitoring the following application-related connectivity parameters: consumed bandwidth by application A1,A2,A3, runtime of each application A1,A2,A3, number of failure notifications for all applications A1,A2,A3. Now AI methods are used to determine an optimized setting, or here, for which bandwidth values the number of failure notifications is reaching a minimum. In this example, this determination step is only applied for the high priority applications A2,A3. The optimized setting, i.e. the bandwidth value for which the number of failure notifications is reaching a minimum, is then output the at low priority application A1 via the control channel C1 in order to assign the optimized bandwidth value to the low priority application A1.

The determination of the optimized bandwidth value for the low priority application A1 follows the rational that the holistic device connectivity performance is optimized. In fact, the optimized bandwidth value for the low priority application was determined by the objective of reducing the number of failure notifications, which is beneficial for the holistic device.

It is to be understood that the elements and features recited in the appended claims may be combined in different ways to produce new claims that likewise fall within the scope of the present embodiments. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification. While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A controller in communication with at least one application running on a device, wherein the controller comprises:
- an inventory module for obtaining at least one application-specific connectivity requirement from at least one application and for monitoring a plurality of application-related connectivity parameters of the at least one application;
- an optimization module for determining at least one optimized setting for at least one of the applications such that a holistic device connectivity performance is optimized while considering one or more of the at least one application-specific connectivity requirements;
- a provisioning module for establishing at least one control channel interfacing at least one data storage assigned to one or more of the applications, wherein the provisioning module outputs the at least one optimized setting to the at least one data storage via the respective control channels to assign the at least one optimized setting to one or more of the applications.

2. The controller as recited in claim 1 wherein the controller is a part of the device.

3. The controller as recited in claim 1 wherein the controller is at least one of said applications running on the device.

4. The controller as recited in claim 1 wherein said application-specific connectivity requirements include one or more of:
- an importance of the at least one application;
- a real-time criticality of the at least one application; and/or;
- a priority of the at least one application.

5. The controller as recited in claim 1 wherein said application-related connectivity parameters include one or more of:
- a bandwidth consumed by the at least one application;
- a runtime of the at least one application; and/or;
- a number of failure notifications issued by the at least one application.

6. The controller as recited in claim 1 wherein optimized settings include one or more of:
- a bandwidth assigned to the at least one application for its network access;
- a latency assigned to the at least one application for its network access; and/or;
- a priority assigned to the at least one application for its network access.

7. A computer-implemented method for adjusting a balanced connectivity optimum, the method including the steps of:
- obtaining at least one application-specific connectivity requirement from at least one application running on a device;
- monitoring a plurality of application-related connectivity parameters of the at least one application;
- determining at least one optimized setting for at least one of the applications such that a holistic device connectivity performance is optimized while considering one or more of the at least one application-specific connectivity requirements;
- establishing at least one control channel interfacing at least one data storage assigned to one or more of the applications
- outputting the at least one optimized setting to the at least one data storage via the respective control channels to assign the at least one optimized setting to one or more of the applications.

8. The method as recited in claim 1, wherein the act of determining at least one optimized setting for at least one of the applications includes the steps of:
- iteratively assigning the plurality of application-related connectivity parameters to a plurality of nodes associated with an artificial neural network model to generate at least one optimized setting for at least one of the applications;
- computing, for the current iteration, a trade-off value based on the at least one optimized setting of the current iteration and at least one of the application-specific connectivity requirements; and;
- selecting the least one optimized setting of the current iteration, based on the trade-off value calculated for the current iteration.
